# EUROPEAN PATENT SPECIFICATION

(11) **EP 1 828 752 B1**
(45) Date of publication and mention of the grant of the patent: **12.09.2012**
(21) Application number: 05820422.3
(22) Date of filing: 21.12.2005
(51) Int. Cl.: G01N 21/64, G01N 15/14

(54) **A METHOD AND APPARATUS FOR ANALYSING A DYNAMIC SAMPLE**
VERFAHREN UND VORRICHTUNG ZUR ANALYSE EINER DYNAMISCHEN PROBE
PROCEDE ET APPAREIL POUR ANALYSER UN ECHANTILLON DYNAMIQUE

(30) Priority: 22.12.2004 GB 0428044; 02.08.2005 GB 0515845
(43) Date of publication of application: 05.09.2007
(73) Proprietor: Perkinelmer Singapore PTE Ltd., Singapore 139947 (SG)
(72) Inventor: COURTNEY,Patrick PerkinElmer Life Sciences, Beaconsfield, Buckinghamshire HP 92FX (GB); HOULT,Robert PerkinElmer Life Sciences, Beaconsfield, Buckinghamshire HP 92FX (GB); FITCH, Alistair, PerkinElmer Life Sciences, Beaconsfield, Buckinghamshire HP 92FX (GB); BUSH, Steve, PerkinElmer Life Sciences, Beaconsfield, Buckinghamshire HP 92FX (GB); LADHA, Shab, PerkinElmer Life Sciences, Beaconsfield, Buckinghamshire HP 92FX (GB); BLACKMORE, Colin, PerkinElmer Life Sciences, Beaconsfield, Buckinghamshire HP 92FX (GB)
(74) Representative: Sharrock, Daniel John
(86) International application number: PCT/GB2005/004954
(87) International publication number: WO 2006/067426

(56) References cited:
- EP-A- 1 146 480
- US-A- 5 215 883
- US-B1- 6 462 345
- HELL S W ET AL: "Concepts for nanoscale resolution in fluorescence microscopy" CURRENT OPINION IN NEUROBIOLOGY, LONDON, GB, vol. 14, no. 5, October 2004 (2004-10), pages 599-609, XP004583527 ISSN: 0959-4388
- HIRSCHFELD T: "FLUORESCENCE BACKGROUND DISCRIMINATION BY PRE BLEACHING" JOURNAL OF HISTOCHEMISTRY AND CYTOCHEMISTRY, vol. 27, no. 1, 1979, pages 96-101, XP002371466 ISSN: 0022-1554
- ROBERTS K E ET AL: "Selective dequenching by photobleaching increases fluorescence probe visibility" JOURNAL OF FLUORESCENCE KLUWER ACADEMIC/PLENUM PUBLISHERS USA, vol. 13, no. 6, November 2003 (2003-11), pages 513-517, XP002371467 ISSN: 1053-0509
- T. WATANABE ET AL: "Two-color far-field super-resolution microscope using a doughnut beam" CHEMICAL PHYSICS LETTERS ELSEVIER NETHERLANDS, vol. 371, no. 5-6, 14 April 2003 (2003-04-14), pages 634-639, XP002371468 ISSN: 0009-2614
- KUBITSCHECK U. ET AL: 'Imaging and Tracking of Single GFP Molecules in Solution' BIOPHYSICAL JOURNAL, NEW YORK, US, US vol. 78, 01 April 2000, pages 2170 - 2179, XP002985267 ISSN: 0006-3495
- NICHOLS BENJAMIN J. ET AL: 'Rapid cycling of lipid raft markers between the cell surface and Golgi complex' JOURNAL OF CELL BIOLOGY vol. 153, no. 3, 30 April 2001, pages 529 - 541 ISSN: 0021-9525

## Description

### Field of the invention

The present invention relates to a method and apparatus for analysing a sample of biological material which includes moving components.

### Background

A conventional approach to tracking moving components in a sample is to determine changes relative to the background in order to identify regions which may be mobile components of interest. In fluorescence microscopy, the components of interest may be tagged by fluorescent labels or probes, making the task of distinguishing them from the background relatively straightforward.

Fluorescent molecules employed as labels typically have a specific excitation spectrum, being more strongly excited at some wavelengths and less strongly excited at others. They also have a specific emission spectrum, emitting more intensely at some wavelengths, and less intensely at others. The excitation and emission spectra may range from the ultraviolet to the infrared.

A wide range of fluorescent probes have been developed from chemical molecules, such as Rhodamine and Fluoroscein. Further fluorescent probes have been developed from molecules found in luminescent organisms, for example the *Aequorea* Jellyfish which has provided the Green Fluorescent Protein (GFP), and various corals providing DsRed and HcRed. These have been termed AFPs (Aequorea Fluorescent Proteins) and are described for example in J. Zhang, et al, Nature Reviews: Molecular Cell Biol., Vol 3, Dec 2002, pp906-918; Y.A. Labas, Proc. Natl. Acad. Sci., 2002, Vol 99, pp4256-4261; and M.V. Matz, Bioassay, Vol 24, pp953-959.

The fluorescent probes may be associated with specific molecules of interest (DNA, RNA, proteins, carbohydrates, antibodies, etc). Alternatively they may be made to be sensitive to certain characteristics (ionic concentration, pH, voltage potential, temperature, the presence of a specific enzyme, the presence of specific enzyme substrates, force), altering their fluorescent properties according to these characteristics. These labels may be introduced into cells by passing through the cell membrane or by injection. Alternatively they may be formed internally as part of the normal functioning of the cell, in the case of the genetically encoded probes such as the AFPs.

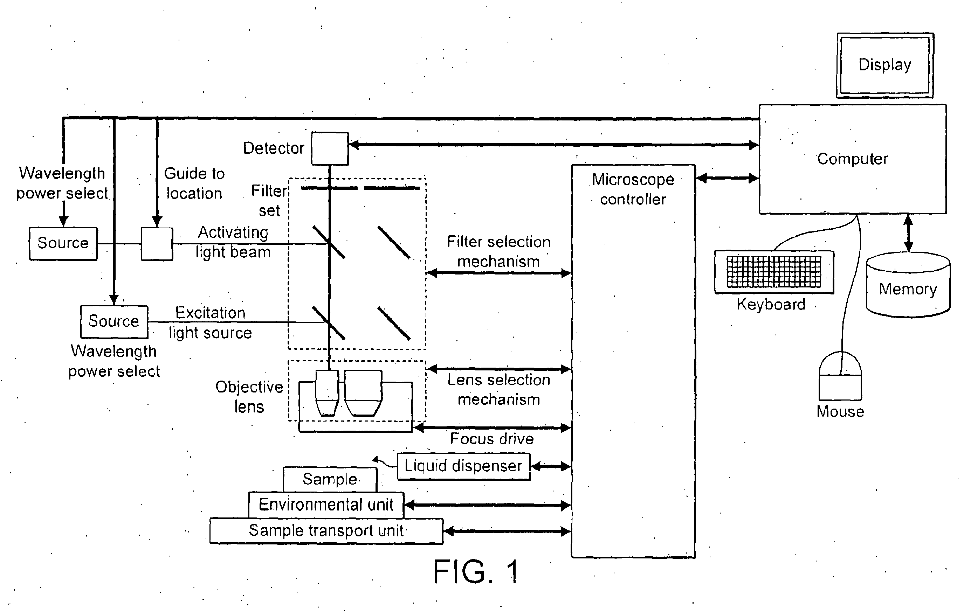

In a known apparatus for imaging samples including fluorescent labels, a fluorescence microscope (Figures. 1) is fitted with an excitation light source which is capable of exciting one or more fluorescent probes at specific wavebands. The microscope is also fitted with suitable optical filters so that the light emitted from the probes may be observed at other wavebands. Examining the spatial and temporal distribution of light emitted provides information on the structure and dynamics of the sample.

The use of multiple labels provides information on the coincident localisation of labelled components, revealing, for example, the organization of the cytoskeleton of a cell. The fluorescence microscope is often fitted with an image acquisition system, comprising a light sensitive detector (sensitive from the ultraviolet to the infrared) such as a CCD camera or a combination of a scanner and a photomultiplier tube, and recording means such as a video recorder or computer system with a memory device, so that dynamic behaviour of the sample may be captured and analysed offline.

The system may employ a focus drive mechanism for altering the position of the imaging focus plane, thus allowing volumetric (XYZ) and volumetric time series (XYZT) data to be acquired. By selecting suitable excitation and/or emission wavebands and/or selecting suitable optical filter sets, volumetric multi-wavelength (XYWZ) and volumetric multi-wavelength time series (XYWZT) data may be acquired.

The microscope may also be fitted with additional apparatus to control the temperature, gas content and flow, introduce liquids, etc.

In order to gain a deeper understanding of the dynamic processes in a sample such as a living cell, an additional activating light beam may be provided (in many cases based on the excitation light source). The activating light beam may be directed to portions of the sample containing labels in such a manner that the intense light from this beam bleaches the label and reduces its fluorescence. By observing the subsequent development of fluorescence in this region, and elsewhere in the sample, information can be obtained on mechanisms of interaction and exchange of various labelled components (for example, as described in AxelRod, Biophys. J., 1977, Vol 18, pp129-131; and Phair et al, Nature, 2000, Vol 404, pp604-609).

Methods and apparatus for analysis of samples including fluorescent labels are disclosed in W02006/024819.

Moving components may often be distinguishable by their size, shape or trajectory, for example. However, this can be problematic if the components concerned are very similar in shape and size, or vary considerably in shape and size over time, or have unpredictable trajectories.

Existing approaches to addressing this problem include locating candidate particles and estimating the matches between frames. Examples are described in J.L. Barron, Fleet, D.J., and Beauchemin, S. (1994) Performance of optical flow techniques, International Journal of Computer Vision, 12(1):43-77; Nagel, H.-H. 1977, Analysing Sequences of TV-Frames: System Design Considerations, In Proc. Intern. Joint Conference on Artificial Intelligence, Cambridge, MA, 626; Nagel, H.-H. 2000, Image Sequence Evaluation: 30 Years and Still Going Strong, In Proc. 15th Intern. Conf. Pattern Recognition, A. Sanfeliu, J.J. Villanueva, M. Vanrell, R. Alqu'ezar, J.-O. Eklundh, and Y. Aloimonos (Eds.), Vol. 1, 149-158. Los Alamitos, CA: IEEE Computer Society; M. Isard and A. Blake, Condensation - conditional density propagation for visual tracking, International Journal of Computer Vision 29(1), pp. 5-28, 1998; D. Comaniciu, V. Ramesh, and P. Meer, Kernel-Based Object Tracking, IEEE PAMI, vol. 25, no. 5, May 2003; Raffel M., Willert C., Kompenhans J (1998) Particle Image Velocimetry. Springer, Berlin; Stanislas, M., Kompenhans, J., Westerweel, J., Particle Image Velocimetry - Progress towards Industrial Application, Kluwer Academic Publishers, 2000.

Separate bleach and imaging scanning techniques are described in UK Patent Specification No. 2369739, and "Beam Control in a Scanning Microscope", J. Engelhardt/Leica, 5 June 2002.

Hell et al in Current Opinion in Neurobiology 2004 14:599-609 discloses stimulated emission depletion (STED) microscopy for high resolution imaging of fluorescently stained static samples.

US 5215883 discloses rapid measurement of the electrophoretic mobility of fluorescently labelled DNA fragments in gels using crossed laser beams to produce a static photobleached interference pattern on the gel and then measuring movements of unbleached fluorescently labelled DNA fragments through the photobleached pattern on electrophoretic separation by low intensity illumination in the same interference pattern, producing a periodic interaction between the photobleached pattern and the fluorescent pattern.

Hirschfield in The Journal of Histochemistry and Cytochemistry Vol. 27 No. 1 p.96-101, 1979 discloses photochemical bleaching of fluorescent dyes to time discriminate between diverse fluorescent molecules.

Roberts et al in Journal of Fluorescence Vol. 13, No. 6, November 2003, p513-517, discusses photobleaching of background fluorescence.

Kutbitschek et al in Biophysical Journal Vol. 78, April 2000, p2170-2179, discloses tracking of green fluorescent protein (GFP) molecole by fluorescence microscopy.

In "Rapid Cycling of Lipid Raft Markers between the Cell Surface and Golgi Complex", Nichols et al describe the use of photobleaching to monitor the transfer of labelled components to and from the Golgi complex of a cell. Initially, all fluorescence outside the Golgi region is eliminated by photobleaching.

### Summary of the invention

The present invention is directed at a method of analysing a sample of biological material including moving components tagged with respective fluorescent labels, the method comprising the steps of identifying a specific labelled component to be monitored, and irradiating with a light beam at least one region of the sample which substantially surrounds said specific component so as to photobleach labels in the region such that they are distinguishable from the label associated with said specific component.

According to the invention, the method includes the steps of monitoring the at least one irradiated region, and triggering a further irradiation step in response to detection of additional labelled components entering the at least one region. This serves to assist the tracking of said specific component. Further irradiation may ensure that said specific component continues to be distinguishable from other adjacent labelled components in a dynamic sample.

Advantageously the imaging apparatus is configured to monitor the one or more irradiated regions and trigger a further irradiation in response to detection of additional labelled components entering the one or more regions. In this way, irradiation may be controlled so as to only occur when necessary, minimising the amount of radiation incident on the sample.

In embodiments of the invention, the light beam may irradiate two or more regions which in combination substantially surround said specific component.

The one or more regions may substantially surround said specific component in two or three dimensions. They may define a complete or substantially complete geometric shape, such as an annulus (in two dimensions) or a hollow sphere (in three dimensions) for example.

In a preferred embodiment, the one or more regions define an enclosed area or volume which is elongate. In particular, it may be elongate in the direction of travel of said specific component.

The invention is further directed at apparatus for analysing a sample including moving components tagged with respective fluorescent labels, the apparatus including means for irradiating at least one region of the sample with a light beam so as to photobleach labels in the region, a support for holding the sample, and control means adapted to move the light beam and the sample support relative to each other, so that said movement causes the irradiating means to irradiate with the light beam at least one region of the sample which substantially surrounds the location of a specific labelled component so as to photobleach labels in the region, such that they are distinguishable from the label associated with said specific component.

According to the invention, the apparatus includes means for monitoring the at least one irradiated region and triggering a further irradiation in response to detection of additional labelled components entering the at least one region.

### Detailed description of the invention

Prior art and embodiments of the invention will now be described by way of example and with reference to the accompanying schematic drawings, wherein:
Figure 1 shows a block diagram of a known apparatus for investigating biological samples;
Figures 2A and 2B show images of part of a sample at two points in time; and
Figures 3A and 3B show images of part of a sample at two points in time and bleaching of a selected region according to an embodiment of the invention.

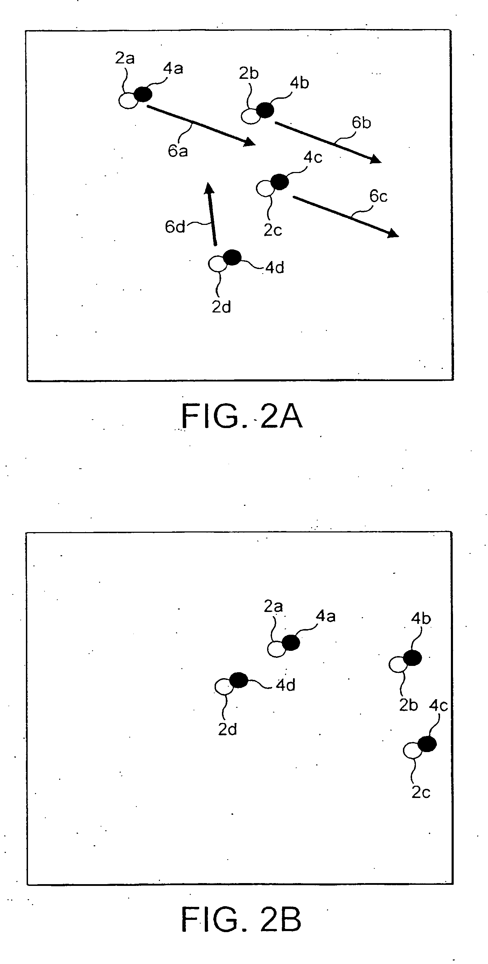

Figure 2A shows four components 2a to 2d in a sample, each tagged with a respective fluorescent label, 4a to 4d. The direction of travel of each component is indicated by a respective arrow, 6a to 6d.

Figure 2B shows the same view as 2A, after a period of time has elapsed. It can be seen that an observer following component 2d may risk confusing it with component 2a which passes close to it.

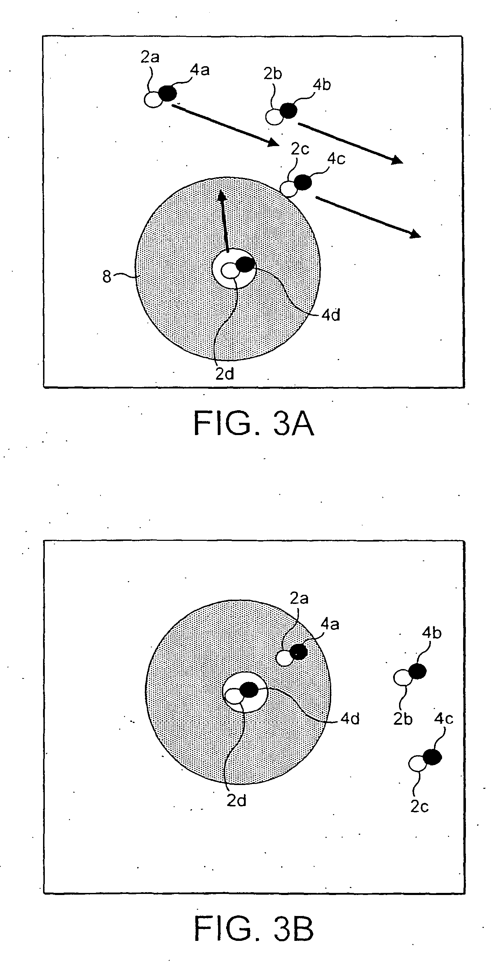

To address this issue, according to an embodiment of the invention, an annular region 8 surrounding the component of interest 2d is irradiated with an energy beam, as shown in Figure 3A. For example, a light beam may be used, having an intensity in the annular region 8 sufficient to bleach any fluorescent label on which it is incident.

The configurations of particles at two instances of time shown in Figures 3A and 3B correspond to those of Figures 2A and 2B. However, it can be seen that in Figure 3B, component 2a and its associated label 4a fall within the region 8 surrounding the component of interest 2d, and its label 4d. Irradiation of region 8 in Figure 3B bleaches label 4a, making the label 4d optically distinguishable therefrom.

According to the invention, the more bleached region is monitored, and bleaching only applied if any object is observed to be entering the region. This has the advantage of minimizing the amount of light allowed to reach the sample.

Thus the desired result is achieved by optically modifying (bleaching) the neighbouring components but to leave the component of interest unmodified.

The bleached region may be of a doughnut shape, that is, a ring of bleached material. A central, less bleached area of unmodified material, is surrounded by a more bleached region which is optically modified and the region beyond the more bleached area which is also unmodified. The central, less bleached area is preferably somewhat larger than the component of interest, to take into account uncertainty in the position and motion of the component of interest.

The more bleached area is preferably large enough to optically modify all the components likely to be confused with the component of interest, but small enough to permit the instrument to deliver a light dose sufficient to optically modify the neighbouring components without causing damage to the sample (cell).

The more bleached area may for example be scanned in a linear (raster) format, or any vector or dot pattern. Alternatively, the beam itself may be formed into the desired shape, such as an annular shape, for example.

Formation of a laser beam having an annular (or "doughnut") cross-section is described for example in K. S. Youngworth and T. G. Brown, "Focusing of high numerical aperture cylindrical-vector beams," Opt. Express 7, 77-87 (2000); and Gao, C., "New Donut Mode for Optical Tweezers and Spanners, "SPIE 4244, pgs86-89, 2000.

The shape of the irradiated region may be fixed, or may be modified at each time point, based on the information extracted from the image in the view, by instruction from the user, from some other source, or a combination of the three. In this manner neighbouring and potentially interfering components will be bleached and removed from consideration, making continued tracking of the component of interest possible.

Typically, a more bleached area substantially encloses a central, less bleached area, which includes the component of interest. In a preferred embodiment, the central less bleached area is disc-shaped, and the more bleached area is a ring around the less bleached area.

Alternatively, the central less bleached area may be a square, rectangle, arc segment, oblong, or other regular or irregular enclosed shape. Furthermore, the more bleached area may be a square, rectangle, or other regular or irregular enclosed shape, the whole sample or the whole imaging window.

The component of interest may be a cell, part of a cell, or an assembly of cells in one or more fields of view, for example.

More than one less bleached area may be defined, and more than one more bleached region may be formed.

The bleached region may be defined based on the trajectory, route or expected trajectory of the component of interest, thus creating an exclusion zone around the path of the component of interest. In some cases, the region may be based upon the structure of the sample, and may be defined by the shape of the structure, for example, a cell wall, organelle, tubule, and so on.

The time profile of the scanning of the irradiating beam may be non-linear, for example, defining a spiral, with the margin of the irradiated region close to the less bleached area being scanned more slowly and thus receiving an increased light dose. Alternatively a hexagonal scan may be used, which may be easier to implement.

The system may facilitate a simultaneous bleach-and-view process, by the appropriate use of wavelengths and light filtering components. Alternatively, the system may operate by alternating view-then-bleach steps.

The bleaching light and the viewing light may be of different wavelengths and/or different power levels.

Components in a sample may be labelled with one or more fluorescent probes, such as GFP for example, by small molecules such as Fluoroscein, or photoswitching proteins such as KFP1 (described in D.M. Chudakov et al, J. Biol. Chem., 2003, Vol. 278(9), pp. 7215-7219), Kaede (see R. Ando, H. Hama, M. Yamamoto-Hino, H. Mizuno and A. Miyawaki, An optical marker based on the UV-induced green-to-red photoconversion of a fluorescent protein, PNAS, October 1, 2002, vol. 99, no. 20, pp. 12651-12656), and PA-GFP (see J. Lippincott-Schwartz et al, Nature Supp. Imaging in Cell Biol., Sept 2003, S7-S14).

The sample may be scanned in the Z-direction (that is, perpendicular to the plane of view) to acquire volumetric information. Furthermore, the more bleached region may extend into a different Z-plane than the less bleached region. The more bleached region may be defined above and/or below the component of interest. In particular, this could be used to extend an annular shape to create a weakly enclosed sphere. The region above/below could be formed by modifying the optical path of the bleaching beam and/or using an off-axis path, and/or modulating the beam.

The more bleached region could be part of a sphere. This bleached region could be monitored and bleached according to the actual or predicted trajectory of the component, or other components.

Irradiation of a sample at different positions along the Z-axis could be carried out using the well-established 2-photon (or multi-photon) mechanism. This requires a high power pulsed laser of longer wavelength (typically 800-1000nm) which emits very short intense pulses which are focussed at specific Z planes. The fluorescent molecules at this location receive 2 photons almost simultaneously, providing the equivalent energy of 1 photon of half the wavelength, thus bleaching the molecules. Molecules above and below this plane are much less likely to receive two photons so are not affected. This beam may be steered around the particle of interest by moving the sample and/or beam to create the substantially surrounding region.

## Claims

1. A method of analysing a sample of biological material including moving components (2a,2b,2c,2d) tagged with respective fluorescent labels (4a,4b,4c,4d), wherein the method comprises the steps of:
identifying a specific labelled component (2d) to be monitored; and
irradiating with a light beam at least one region (8) of the sample which substantially surrounds said specific component so as to photobleach labels in the region such that they are distinguishable from the label associated with said specific component,
and the method is **characterized by** the steps of:
monitoring the at least one irradiated region; and
triggering a further irradiation step in response to detection of additional labelled components (2a) entering the at least one region.

2. A method of claim 1, wherein the at least one region (8) is defined based on the trajectory, path or expected trajectory of the component to be monitored.

3. A method of claim 1 or claim 2 wherein the light beam may irradiate two or more regions (8) which in combination substantially surround said specific component (2d).

4. A method of any preceding claim wherein the at least one-region (8) may substantially surround said specific component (2d) in two or three dimensions.

5. A method of any preceding claim wherein the at least one region (8) defines an enclosed area or volume which is elongate.

6. A method of claim 5 wherein the enclosed area or volume is elongate in the direction of travel of said specific component (2d).

7. A method of any preceding claim, further comprising moving the light beam and sample relative to each other.

8. Apparatus for analysing a sample of biological material including moving components (2a,2b,2c,2d) tagged with respective fluorescent labels (4a,4b,4c,4d), the apparatus including:
means for irradiating at least one region (8) of the sample with a light beam so as to photobleach labels in the region;
a support for holding the sample; and
control means adapted to move the light beam and the sample support relative to each other, so that said movement causes the irradiating means to irradiate with the light beam at least one region of the sample which substantially surrounds the location of a specific labelled component so as to photobleach labels in the region, such that they are distinguishable from the label associated with said specific component,
**characterised in that** the apparatus includes means for monitoring the at least one irradiated region and triggering a further irradiation in response to detection of additional labelled components (2a) entering the at least one region.

9. Apparatus of claim 8, wherein the at least one region (8) is defined based on the trajectory, path or expected trajectory of the component to be monitored.

## Patentansprüche

1. Verfahren zum Analysieren einer Probe biologischen Materials einschließlich sich bewegender Komponenten (2a, 2b, 2c, 2d), getaggt mit jeweiligen Fluoreszenzmarkern (4a, 4b, 4c, 4d), wobei das Verfahren die folgenden Schritte umfasst:
Identifizieren einer zu überwachenden spezifischen markierten Komponente (2d) und
Bestrahlen mindestens eines Gebiets (8) der Probe, das die spezifische Komponente im Wesentlichen umgibt, mit einem Lichtstrahl zum Fotobleichen von Markern in dem Gebiet, so dass sie sich von dem mit der spezifischen Komponente assoziierten Marker unterscheiden lassen, und wobei das Verfahren durch die folgenden Schritte gekennzeichnet ist:
Überwachen des mindestens einen bestrahlten Gebiets und
Auslösen eines weiteren Bestrahlungsschritts als Reaktion auf die Detektion zusätzlicher markierter Komponenten (2a), die in das mindestens eine Gebiet eintreten.

2. Verfahren nach Anspruch 1, wobei das mindestens eine Gebiet (8) auf der Basis der Bahn, des Pfads oder der erwarteten Bahn der zu überwachenden Komponente definiert wird.

3. Verfahren nach Anspruch 1 oder 2, wobei der Lichtstrahl zwei oder mehr Gebiete (8) bestrahlen kann, die zusammen die spezifische Komponente (2d) im Wesentlichen umgeben.

4. Verfahren nach einem vorhergehenden Anspruch, wobei das mindestens eine Gebiet (8) die spezifische Komponente (2d) in zwei oder drei Dimensionen im Wesentlichen umgeben kann.

5. Verfahren nach einem vorhergehenden Anspruch, wobei das mindestens eine Gebiet (8) einen eingeschlossenen Bereich oder ein eingeschlossenes Volumen definiert, der oder das länglich ist.

6. Verfahren nach Anspruch 5, wobei der eingeschlossene Bereich oder das eingeschlossene Volumen in der Bewegungsrichtung der spezifischen Komponente (2d) länglich ist.

7. Verfahren nach einem vorhergehenden Anspruch, weiterhin umfassend das Bewegen des Lichtstrahls und der Probe relativ zueinander.

8. Vorrichtung zum Analysieren einer Probe biologischen Materials einschließlich sich bewegender Komponenten (2a, 2b, 2c, 2d), getaggt mit jeweiligen Fluoreszenzmarkern (4a, 4b, 4c, 4d), wobei die Vorrichtung Folgendes beinhaltet:
Mittel zum Bestrahlen mindestens eines Gebiets (8) der Probe mit einem Lichtstrahl zum Fotobleichen von Markern in dem Gebiet;
eine Stütze zum Halten der Probe und
Steuermittel, die ausgelegt sind zum Bewegen des Lichtstrahls und der Probenstütze relativ zueinander, so dass die Bewegung bewirkt, dass das Bestrahlungsmittel mit dem Lichtstrahl mindestens ein Gebiet der Probe bestrahlt, das den Ort einer spezifischen markierten Komponente im Wesentlichen umgibt, zum Fotobleichen von Markern in dem Gebiet, so dass sie sich von den mit der spezifischen Komponente assoziierten Marker unterscheiden lassen,
**dadurch gekennzeichnet, dass** die Vorrichtung Mittel enthält zum Überwachen des mindestens einen bestrahlten Gebiets und Auslösen einer weiteren Bestrahlung als Reaktion auf eine Detektion zusätzlicher markierter Komponenten (2a), die in das mindestens eine Gebiet eintreten.

9. Vorrichtung nach Anspruch 8, wobei das mindestens eine Gebiet (8) auf der Basis der Bahn, des Pfads oder der erwarteten Bahn der zu überwachenden Komponente definiert wird.

## Revendications

1. Procédé d'analyse d'un échantillon de matériel biologique comprenant des composants mobiles (2a, 2b, 2c, 2d) marqués par des marqueurs fluorescents respectifs (4a, 4b, 4c, 4d), où le procédé comprend les étapes consistant à :
identifier un composant marqué spécifique (2d) à surveiller ; et
irradier avec un faisceau lumineux au moins une région (8) de l'échantillon qui entoure sensiblement ledit composant spécifique de manière à photodécolorer des marqueurs dans la région de manière à ce qu'ils puissent être distingués du marqueur associé audit composant spécifique,
et le procédé est **caractérisé par** les étapes consistant à :
surveiller l'au moins une région irradiée ; et
déclencher une autre étape d'irradiation en réponse à la détection de composants marqués supplémentaires (2a) entrant dans l'au moins une région.

2. Procédé selon la revendication 1, dans lequel l'au moins une région (8) est définie sur la base de la trajectoire, du chemin ou de la trajectoire escomptée du composant à surveiller.

3. Procédé selon la revendication 1 ou la revendication 2, dans lequel le faisceau de lumière peut irradier deux régions (8), ou plus, qui, en combinaison, entourent sensiblement ledit composant spécifique (2d).

4. Procédé selon l'une quelconque des revendications précédentes, dans lequel l'au moins une région (8) peut sensiblement entourer ledit composant spécifique (2d) en deux ou trois dimensions.

5. Procédé selon l'une quelconque des revendications précédentes, dans lequel l'au moins une région (8) définit une surface ou un volume enclos de forme allongée.

6. Procédé selon la revendication 5, dans lequel les surface ou volume enclos sont allongés dans la direction de déplacement dudit composant spécifique (2d).

7. Procédé selon l'une quelconque des revendications précédentes, consistant en outre à déplacer le faisceau de lumière et l'échantillon l'un par rapport à l'autre.

8. Appareil pour analyser un échantillon de matériel biologique comprenant des composants mobiles (2a, 2b, 2c, 2d) marqués par des marqueurs fluorescents respectifs (4a, 4b, 4c, 4d), l'appareil comprenant :
un moyen pour irradier au moins une région (8) de l'échantillon avec un faisceau de lumière de manière à photodécolorer des marqueurs de la région ;
un support pour maintenir l'échantillon ; et
un moyen de contrôle adapté pour déplacer le faisceau de lumière et le support de l'échantillon l'un par rapport à l'autre, de manière à ce que ledit mouvement entraîne que le moyen d'irradiation irradie avec le faisceau de lumière au moins une région de l'échantillon qui entoure sensiblement l'emplacement du composant marqué spécifique de manière à photodécolorer des marqueurs dans la région, de manière à ce qu'ils puissent être distingués du marqueur associé audit composant spécifique,
**caractérisé en ce que** l'appareil comprend un moyen pour surveiller l'au moins une région irradiée et déclencher une autre irradiation en réponse à la détection de composants marqués supplémentaires (2a) entrant dans l'au moins une région.

9. Appareil selon la revendication 8, dans lequel l'au moins une région (8) est définie sur la base de la trajectoire, du chemin ou de la trajectoire escomptée du composant à surveiller.
